# EUROPÄISCHE PATENTANMELDUNG

(11) **EP 1 916 205 A1**
(43) Veröffentlichungstag der Anmeldung: **30.04.2008**
(21) Anmeldenummer: 07020617.2
(22) Anmeldetag: 22.10.2007
(51) Int. Cl.: B65G 25/02, F16C 3/12, B07B 1/12, B07B 1/28

(54) **Sortiervorrichtung**

(30) Priorität: 23.10.2006 DE 102006050262
(71) Anmelder: Tegel Technik GmbH, 89537 Giengen/Brenz (DE); CSG-Gröger GmbH, 89312 Günzburg (DE)
(72) Erfinder: Schmidt, Josef, 89537 Giengen (DE)
(74) Vertreter: Dr. Weitzel & Partner

(57) **Zusammenfassung**

Die Erfindung betrifft eine Sortiervorrichtung, insbesondere Ballistikseparator, zur Trennung von Abfällen,
- mit einer Vielzahl von nebeneinander angeordneten, mittels einer Antriebsvorrichtung relativ zueinander auf- und abwärts bewegbaren Rüttelkörpern, auf welche das zu sortierende Gut von oben aufgebbar ist; wobei
- eine Kurbelwelle vorgesehen ist, an deren Kurbeln die Rüttelkörper angeschlossen sind, und welche von der Antriebsvorrichtung in Umlauf versetzt wird, um so die Auf- und Abwärtsbewegung der Rüttelkörper zu bewirken;

Die Erfindung ist dadurch gekennzeichnet, dass
- die Kurbelwelle in ihrer Axialrichtung aus einer Vielzahl von Wellenabschnitten, die mit Abstand und fluchtend zueinander angeordnet sind, zusammengesetzt ist,
- jeweils zwei in Axialrichtung benachbart zueinander angeordnete Wellenabschnitte mittels eines exzentrisch zu den Wellenabschnitten angeordneten, lösbar an den Wellenabschnitten angeschlossenen Verbindungselementes kraftschlüssig miteinander verbunden sind, und
- das Verbindungselement wenigstens einen Rüttelkörper drehbar auf dem Verbindungselement trägt.

## Beschreibung

Die Erfindung betrifft eine Sortiervorrichtung mit einer Vielzahl von nebeneinander angeordneten und relativ zueinander auf- und abwärts bewegbaren Rüttelkörpern, auf welche das zu sortierende Gut von oben aufgebbar ist. Die Erfindung betrifft insbesondere einen sogenannten Ballistikseparator zur Trennung von Abfällen, beispielsweise zum Aussortieren beziehungsweise Absieben von Störstoffen und papierfremden Bestandteilen aus einem Gemisch von Altpapier und Kartonagen oder zur Schwer-Leichtteiletrennung in der Sortierung und Aufbereitung von Kunststofffraktionen, Industrie- und Gewerbemüll sowie Ersatzbrennstoffen.

Bei der Sortierung, Trennung und Aufbereitung von Kunststoffen, Industrie- und Gewerbemüll sowie Ersatzbrennstoffen und sonstigen formstabilen Materialanteilen, wie sie die vorliegende Erfindung gemäß einer Ausführungsform betrifft, eignen sich Ballistikseparatoren zur Trennung flächiger Folienanteile von schwereren runden Körpern, wie Flaschen, Bechern, Holzteilen, Kleinteilen, Metalldosen, Emballagen, mineralischen Anteilen und dergleichen. Gleichfalls eignet sich die vorliegende Erfindung gemäß einer Ausführungsform in Form eines Ballistikseparators zur Feinabsiebung und Trennung von Störstoffen, insbesondere auch runden und sonstigen formstabilen Materialanteilen aus einem Altpapier- oder Kartonagegemenge.

Die Formate und Korngrößen oder auch Stückgrößen werden über variabel in Längsrichtung der Rüttelkörper einstellbare Siebraster oder entsprechend gelochte Siebbleche oder Siebgitter definiert.

Ballistikseparatoren beruhen auf dem Prinzip, dass das auf die Oberseite von Rüttelkörpern aufgegebene zu sortierende Gut durch eine Auf- und Abwärtsbewegung der Rüttelkörper eine Steigung hinauftransportiert wird, wobei jene Anteile, die aus dem Gut aussortiert werden sollen, durch Öffnungen in den Rüttelkörpern nach unten durchfallen. Schwere und runde Körper rollen über die schräg eingebauten Rüttelkörper zurück und werden aus dem Separator ausgeschossen. Folien und andere flächige, insbesondere labile Teile wandern hingegen entsprechend ihrer Steigfähigkeit zum sogenannten Überlauf der Maschine, wo sie getrennt von den übrigen Bestandteilen weitertransportiert werden können, zum Beispiel auf Transportbändern.

Die Rüttelkörper, welche auch als Schüttlerkörper oder Paddel bezeichnet werden, führen, angetrieben von einer Antriebsvorrichtung, relativ zueinander eine Auf- und Abwärtsbewegung aus, um das flächige Material in eine vorgegebene Richtung, in der Regel eine Steigung in Längsrichtung der Sortiervorrichtung hinauf, zu transportieren.

Der Antrieb erfolgt über eine Kurbelwelle, an deren Kurbeln die einzelnen Rüttelkörper drehbar befestigt sind und so mit wenigstens einem axialen Ende zusammen mit den Kurbeln über der Kurbelwellendrehachse umlaufen. Die Kurbelwelle ist herkömmlich in Form einer zylinderförmigen, durchgehenden, an beiden axialen Enden gelagerten Welle ausgeführt, die eine Anzahl von Exzenterscheiben trägt. Jeweils ein Rüttelkörper ist mit einem axialen Ende wiederum an einer Exzenterscheibe angeschlossen, um so die gewünschte Auf- und Abwärtsbewegung des Rüttelkörpers zu bewirken.

Die Exzenterscheiben weisen einen kreisrunden Umfang auf und sind exzentrisch auf die Kurbelwelle aufgespannt. Sie werden entlang ihres kreisförmigen Umfangs von einem Rillenkugellager umschlossen. Den radial äußeren Abschluss der Lagerung beziehungsweise der Exzenterscheiben bildet eine Flanschplatte, die mit dem jeweiligen Rüttelkörper verschraubt ist.

Um das Wälzlager einbauen beziehungsweise austauschen zu können, ist dieses nicht als über dem Umfang geschlossenes Lager mit geschlossenen Lagerringen ausgeführt, sondern als offenes Lager, das wenigstens an einer Stelle über dem Umfang aufweitbar ist, um über die Exzenterscheibe geschoben zu werden. Die Exzenterscheibe bildet dabei den inneren Lagerring aus, wohingegen der äußere Lagerring, der in der Regel durch einzelne über dem Umfang nicht geschlossene Lagerringe gebildet wird, zusammen mit dem Kugellagerkäfig in der Regel in Form einzelner Segmente auf die Exzenterscheibe aufgeschoben wird. Wenn die Wälzkörper und der äußere Lagerring geeignet positioniert worden sind, was eine exakte Ausrichtung erfordert, muss das Lager mit einer exakt definierten Menge Fett, in Form eines teuren Spezialfettes, gefüllt und anschließend mit einem Dichtring abgedichtet werden. Ferner ist eine Auswuchtung beziehungsweise exakte Positionierung der einzelnen Exzenterscheiben auf der Welle notwendig. Wie man sich leicht vorstellen kann, bedingt der Lageraufbau eine zeitintensive und aufwendige Montage, die nur von geschultem Fachpersonal durchgeführt werden kann.

In der Praxis hat sich herausgestellt, dass die verwendeten Lager eine Schwachstelle im System darstellen und daher täglich einer Sichtprüfung unterzogen und häufig instandgesetzt werden müssen. Die Instandsetzung ist aufgrund des komplizierten Lageraufbaus und der notwendigen Auswuchtung und Zentrierung nur durch einen Lagerfachmann möglich. Ferner muss in dem Fall eines Lagertausches bei Verletzung des Lagersitzes die gesamte Kurbelwelle ausgebaut und wieder eingebaut werden, was äußerst zeit- und kostenaufwendig ist, einen langen Maschinenstillstand zur Folge hat und nur mit schweren Hebewerkzeugen zu bewerkstelligen ist, was in der Regel durch oftmals komplizierte Einbaupositionen in großer Höhe auf speziellen Maschinenauflagern erschwert wird.

Ein besonderes Problem stellen die Axialkräfte dar, die auf die Lager wirken. Wenn beispielsweise ein Störstoffkörper zwischen zwei Rüttelkörpern oder zwischen einem Rüttelkörper und der Außenwand der Sortiervorrichtung eingeklemmt wird, oder ein schwerer Gegenstand schräg von oben auf eine seitliche Kante eines Rüttelkörpers auftrifft, so führt die resultierende Axialkraft leicht zu axialen Verschiebungen der Exzenterscheiben inklusive dem Lagergehäuse, was zu einer Schädigung der Lager und des Lagersitzes führen kann.

Das Dokument EP 1 618 968 A1 beschreibt eine solche Förder- und Sortiervorrichtung, bei welcher ebenfalls radial geteilte Lager verwendet werden, die auf der Kurbelwelle zusammensetzbar sind.

Der Erfindung liegt daher die Aufgabe zugrunde, eine Sortiervorrichtung der eingangs beschriebenen Art derart weiterzuentwickeln, dass notwendige Lagerreparaturen beziehungsweise ein Austausch nach Verschleiß oder Defekt kostengünstiger, schneller und insbesondere von einem "einfachen" Monteur ohne besondere Fach- und Lagerkenntnisse durchgeführt werden können. Vorteilhaft sollen kostengünstigere und insbesondere lebensdauergeschmierte Standardlager verwendet werden können.

Die erfindungsgemäße Aufgabe wird durch eine Sortiervorrichtung mit den Merkmalen von Anspruch 1 gelöst. Die abhängigen Ansprüche beschreiben vorteilhafte und besonders zweckmäßige Gestaltungen der Erfindung.

Gemäß der erfindungsgemäßen Sortiervorrichtung wird statt einer einzigen durchgehenden Kurbelwelle eine aus einer Vielzahl von einzelnen Wellenabschnitten zusammengesetzte Kurbelwelle verwendet. Die einzelnen Wellenabschnitte sind in Axialrichtung der Kurbelwelle mit Abstand zueinander und fluchtend miteinander angeordnet. Eine Verbindung von jeweils zwei benachbart zueinander angeordneten Wellenabschnitten erfolgt mittels eines Verbindungselementes, das kraftschlüssig und insbesondere formschlüssig, beispielsweise unmittelbar, mit beiden Wellenabschnitten verbunden ist. Das Verbindungselement ist exzentrisch zu den Wellenabschnitten angeordnet und erfüllt somit zwei Funktionen: Erstens stellt es die beschriebene kraftschlüssige Verbindung zwischen den einzelnen Wellenabschnitten her, damit nur ein einziger Wellenabschnitt von einer Antriebsvorrichtung angetrieben werden muss, um die Kurbelwelle in Umlauf zu versetzen. Zweitens bildet jedes Verbindungselement aufgrund seiner exzentrischen Anordnung relativ zu den Wellenabschnitten eine Kurbel der Kurbelwelle aus. Auf dieser Kurbel beziehungsweise dem Verbindungselement ist wenigstens ein Rüttelkörper drehbar gelagert.

Jedes Verbindungselement, mit welchem zwei in Axialrichtung benachbart zueinander angeordnete Wellenabschnitte kraftschlüssig miteinander verbunden sind, ist lösbar an den beiden Wellenabschnitten angeschlossen. Die Lösbarkeit bietet den erheblichen Vorteil, dass nun über dem Umfang geschlossene Lager verwendet werden können, die bei einem Schaden leicht austauschbar sind. Beispielsweise sind solche Lager sogenannte lebensdauergeschmierte Lager, das heißt Lager, welche frei von Schmiermittelzufuhreinrichtungen sind, wie beispielsweise Schmiernippel, wie sie herkömmlich zur Nachschmierung von Lagern verwendet werden. Auch bei einem Schaden an der Kurbelwelle ist es nun nicht mehr notwendig, die gesamte Kurbelwelle zu demontieren und auszutauschen, sondern nur der beschädigte Abschnitt kann leicht durch Demontage des oder der entsprechenden Verbindungselemente beziehungsweise Wellenabschnitte und Austausch durch neue Bauteile erreicht werden.

Bei der erfindungsgemäß ausgeführten Sortiervorrichtung werden axiale Lagerverschiebungen, die das Lager stark beanspruchen und zerstören könnten, vermieden. Ferner ist es, abweichend vom Stand der Technik, nicht mehr erforderlich, spezielle Dichtringe mit genau definierter Länge zu verwenden, die mit einem Spezialklebstoff (Zyanacrylat) verklebt werden müssen.

Gemäß einer besonders vorteilhaften Ausführungsform der Erfindung ist das jeweilige Verbindungselement mit seinen beiden benachbart zu diesem angeordneten Wellenabschnitten ausschließlich verschraubt und/oder verstiftet. Das Verbindungselement trägt den Rüttelkörper mittels wenigstens eines Wälzlagers, das beispielsweise an einer an dem Rüttelkörper befestigten, insbesondere verschraubten Konsole montiert ist. Somit ist es möglich, bei einer Schädigung des Wälzlagers einfach das Verbindungselement von den beiden benachbart hierzu angeordneten Wellenabschnitten abzuschrauben, den Rüttelkörper von der Konsole abzuschrauben und die komplett montierte Einheit aus Verbindungselement, Wälzlager und Konsole gegen eine andere vormontierte Einheit auszutauschen. Die andere vormonierte Einheit kann dieselben baulichen Abmaße wie die auszutauschende Einheit aufweisen oder aber, um den Hub des angeschlossenen Rüttelkörpers zu ändern, eine abweichende Abmessung, wenigstens in Radialrichtung.

Besonders vorteilhaft wird jeder Rüttelkörper auf einem Verbindungselement durch zwei in Axialrichtung der Kurbelwelle nebeneinander angeordnete Wälzlager getragen, welche insbesondere in einem gemeinsamen Gehäuse, beispielsweise in Form eines die beiden Lager in Umfangsrichtung umschließenden Ringes, aufgenommen sind. Hierdurch kann eine besonders große Stabilität gegen Verkippen des Rüttelkörpers erreicht werden.

Zur Erhöhung der Stabilität der Sortiervorrichtung kann ferner in Axialrichtung beidseits jedes Verbindungselementes und damit beidseits jedes Rüttelkörpers ein sogenanntes Stehlager vorgesehen sein, in welchem der entsprechende Wellenabschnitt gelagert ist. Ein solches Lager wird als Stehlager bezeichnet, da es stationär in einem Ständer, in welchem die Kurbelwelle getragen wird, montiert ist.

Bei einer besonders spielfrei gelagerten Kurbelwelle, beispielsweise durch Vorsehen einer entsprechend großen Anzahl von Lagern, ist es vorteilhaft, die Rüttelkörper mit einem elastischen Längenausgleich beziehungsweise mit einer Längenverstelleinrichtung zu versehen, um Herstellungstoleranzen und/oder im Betrieb, beispielsweise durch unterschiedliche Wärmedehnungen, auftretende Toleranzen zu kompensieren. Eine solche Längenverstelleinrichtung kann entweder mechanisch verstellbar ausgeführt sein, das heißt die Möglichkeit bieten, die korrekte Länge bei der Montage oder bei der Inbetriebnahme einzustellen und anschließend diese Länge eines Rüttelkörpers zu fixieren. Alternativ oder zusätzlich kann die Längenverstelleinrichtung elastisch ausgeführt sein, das heißt der Rüttelkörper ist in Richtung seiner Längsachse ausreichend elastisch, um die unerwünschten Längentoleranzen auszugleichen.

Die Wälzlager können als geschlossenes Standardlager ausgeführt sein. Es ist demnach nicht notwendig, segmentierte Lager mit speziellen Dichtringen zu verwenden. Vielmehr können sogenannte lebensdauergeschmierte Lager zum Einsatz kommen, das heißt Lager, die mit einem Schmiermittel, insbesondere Fett, gefüllt sind und ein geschlossenes Gehäuse aufweisen, das nicht zum Öffnen bestimmt ist oder nicht geöffnet werden kann.

Die Erfindung soll nachfolgend anhand eines Ausführungsbeispiels exemplarisch erläutert werden. Dabei ist es nicht notwendig, sämtliche in dem Ausführungsbeispiel gezeigten Merkmale zu verwirklichen. Vielmehr können einzelne Merkmale oder Gruppen von Merkmalen unabhängig voneinander angewendet werden.

Es zeigen:
- Figur 1: eine dreidimensionale Ansicht einer montierten Kurbelwelle einer erfindungsgemäßen Sortiervorrichtung;

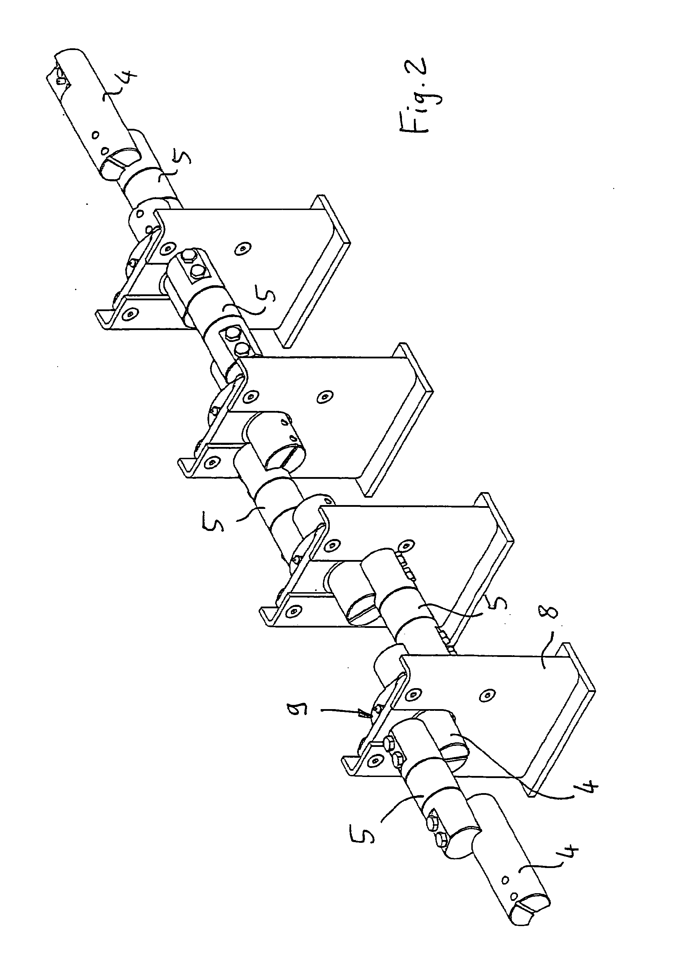

- Figur 2: die Kurbelwelle aus der Figur 1 ohne die Konsolen und Wälzlager auf den einzelnen Verbindungselementen;
- Figur 3: eine Explosionsdarstellung eines Ausführungsbeispiels zur Montage von zwei Wälzlagern an zwei plattenförmigen Konsolen, die an einen Rüttelkörper angeschraubt werden können;
- Figur 4: eine teilweise geschnittene Ansicht durch eine erfindungsgemäße Sortiervorrichtung im Bereich der Kurbelwelle;
- Figur 5: eine Explosionsdarstellung mit aneinander zu verschraubenden Wellenabschnitten und Verbindungselementen.

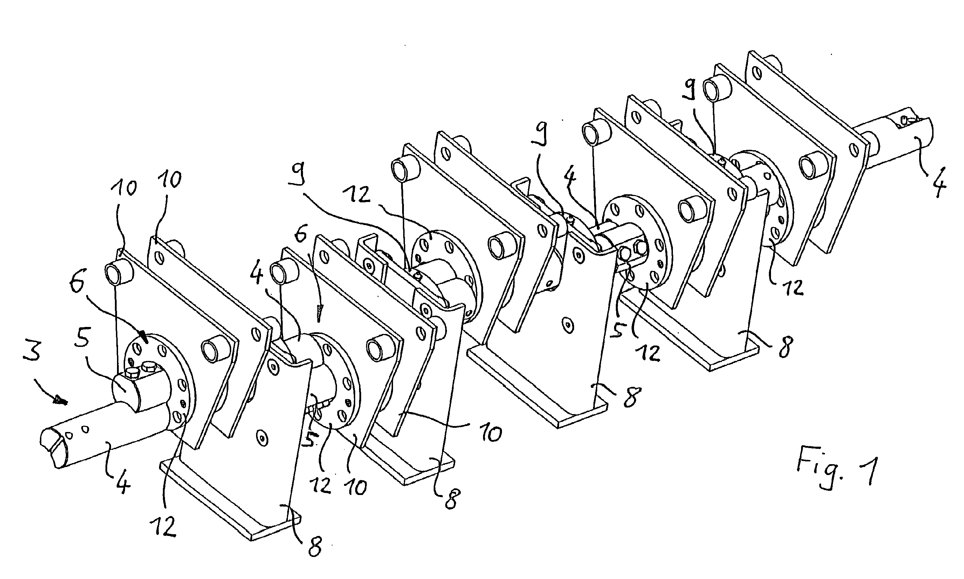

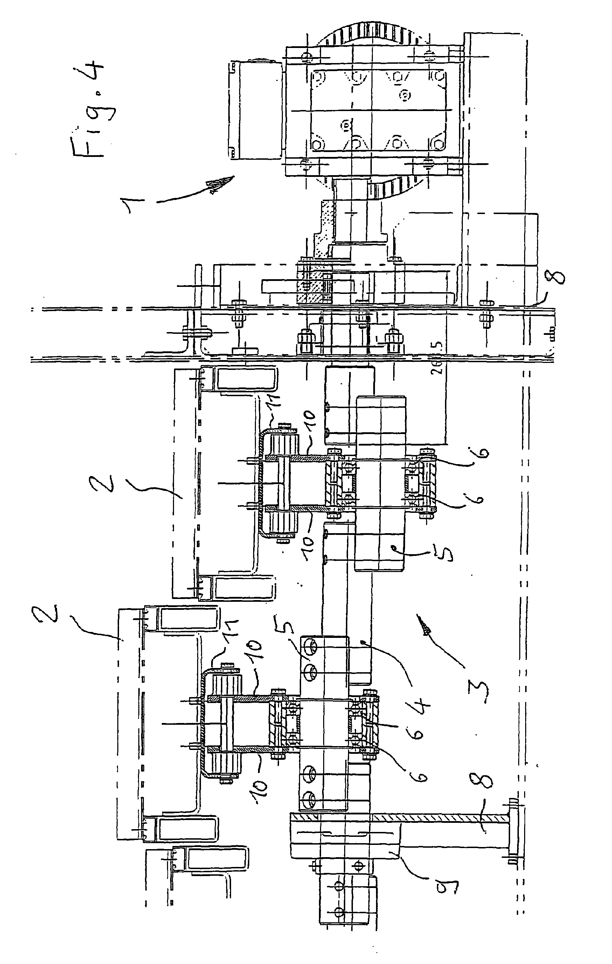

In der Figur 1 erkennt man den erfindungsgemäß besonders relevanten Bereich einer Sortiervorrichtung in Form eines Ballistikseparators. Ergänzend wird zugleich auf die Darstellung in der Figur 4 verwiesen. So erkennt man die Kurbelwelle 3, die aus einer Vielzahl, in Axialrichtung abwechselnd zueinander angeordneten Wellenabschnitten 4 und Verbindungselementen 5 besteht beziehungsweise zusammengesetzt ist. Jeweils ein Verbindungselement 5 ist im Bereich seiner beiden axialen Enden an jeweils einem Wellenabschnitt 4 angeschraubt. Zur Positionsfestlegung in axialer Richtung ist zusätzlich im Bereich der Verschraubung, hier zwischen den zwei vorgesehenen Schrauben je axialem Ende, eine Passstiftverbindung mit einem Zylinderstift vorgesehen.

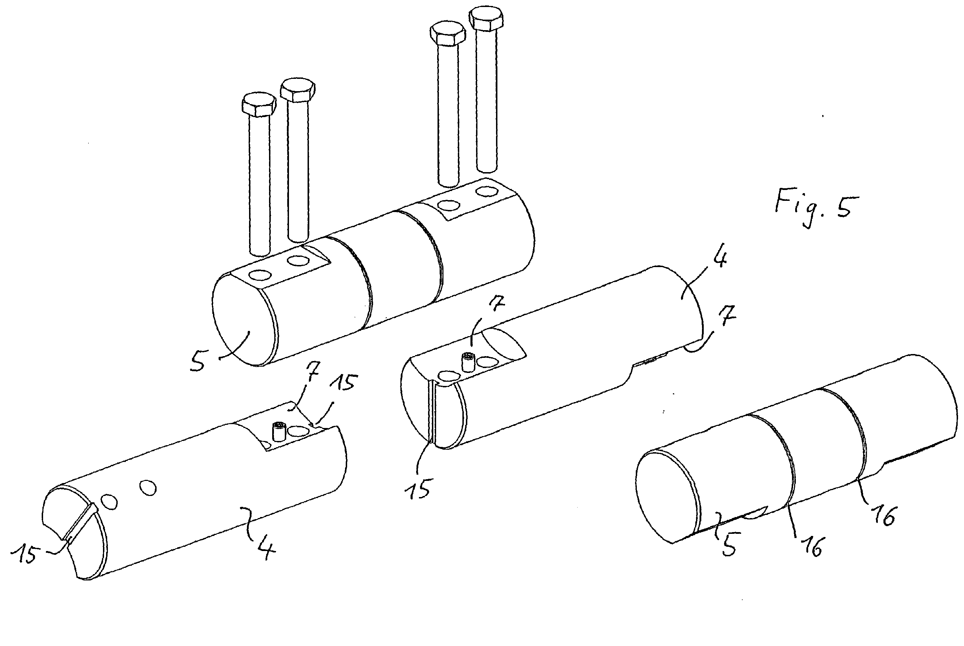

Details der Verschraubung beziehungsweise der formschlüssigen Verbindung zwischen den einzelnen Wellenabschnitten 4 und den zwischengeordneten Verbindungselementen 5 können der Figur 5 entnommen werden. Sowohl die Wellenabschnitte 4 als auch die Verbindungselemente 5 weisen eine im wesentlichen zylinderförmige Form auf. Die Wellenabschnitte 4 sind im Bereich ihrer beiden axialen Enden mit einer in Umfangsrichtung konkaven Nut 7 versehen, in welche im verschraubten Zustand die zylindrische Oberfläche eines Verbindungselements 5 formschlüssig eingreift. Die Wellenabschnitte 4 beziehungsweise Verbindungselemente 5 sind somit an ihren einander zugewandten axialen Enden komplementär ausgeführt.

Die Tiefe der Nut 7 beziehungsweise der Durchmesser des Verbindungselementes 5, wenigstens im Bereich seiner axialen Enden, bestimmt die Exzentrizität des Verbindungselementes 5 und damit den Hub, welchen der an dem Verbindungselement 5 angeschlossene Rüttelkörper 2 (siehe die Figur 4) durchläuft. Durch Ändern der Tiefe der Nut 7 beziehungsweise des Durchmessers des Verbindungselementes 5 kann der Hub somit besonders leicht variiert werden. Auch ist es möglich, um den Hub einzustellen, zwischen jeweils einem Verbindungselement 5 und dem zugeordneten Wellenabschnitt 4 ein Distanzstück mit gewünschter Stärke einzulegen.

Selbstverständlich ist es auch möglich, das Verbindungselement 5 an einem oder beiden axialen Enden mit einer entsprechenden konkaven Nut zu versehen und die Oberfläche des jeweils zugeordneten Endes der Wellenabschnitte 4 zylinderförmig zu gestalten. Andere Formschlüsse sind denkbar.

Bei der in der Figur 5 dargestellten Ausführungsform wird ein Versatz der Verbindungselemente 5 in Umfangsrichtung über der Kurbelwelle zueinander, um einen zeitlichen Versatz im Hub der einzelnen Rüttelkörper zu erreichen, durch Versetzen der Nuten 7 in Umfangsrichtung über den Wellenabschnitten 4 zueinander erreicht. Die Bohrungen in den Wellenabschnitten 4, welche die Schrauben der Verschraubung aufnehmen, gehen jeweils vom tiefsten Punkt der Nut 7 aus und entsprechen in ihrer Richtung der Tiefenrichtung der Nut 7. Wenn nun eine entsprechende Nut 7 nicht an jedem Ende der Wellenabschnitte 4, sondern an den Enden der Verbindungselemente 5 vorgesehen wird, und die der Nut zugewandte Oberfläche der Wellenabschnitte 4 zylindrisch ist, so kann der Versatz der Verbindungselemente 5 über dem Umfang der Kurbelwelle allein durch die Radialrichtung der Bohrungen in den Wellenabschnitten 4, welche die Verschraubung aufnehmen, eingestellt werden. Somit ist es besonders leicht möglich, den Versatz in Umfangsrichtung einzustellen oder auch bei einer bereits bestehenden Sortiervorrichtung zu ändern, da nur die Bohrungen entsprechend eingebracht werden müssen oder gegebenenfalls neue Bohrungen eingebracht werden müssen, welche in Umfangsrichtung der Wellenabschnitte 4 versetzt zu den bestehenden Bohrungen sind. Natürlich kann auch ein Wellenabschnitt 4 mit vorhandenen Bohrungen durch einen Wellenabschnitt 4 mit entsprechend in Umfangsrichtung versetzten Bohrungen ausgetauscht werden.

Ein weiterer Vorteil bei einer Ausführungsform mit zylindrischen Wellenabschnitten 4, wobei für die Muttern oder Schraubenköpfe am axialen Ende der Bohrungen auch eine Aussparung vorgesehen werden kann, wie sie beispielsweise in der Figur 5 in den Verbindungselementen 5 dargestellt ist, besteht darin, dass für die verschiedenen Wellenabschnitte 4 Gleichteile verwendet werden können. Ferner ist die Belastung in den Wellenabschnitten 4 aufgrund verringerter Kerbwirkungen reduziert.

Der Versatz der Verbindungselemente 5 in Umfangsrichtung der Kurbelwelle ist auf die Anzahl der Rüttelkörper abgestimmt. Insbesondere ist der Versatz zwischen zwei benachbart zueinander angeordneten Verbindungselementen 5 abweichend, in der Regel kleiner als 180° und liegt beispielsweise zwischen 40 und 120°. Dementsprechend ist auch der Versatz bezogen auf die Umfangsrichtung der Nuten 7 an beiden axialen Enden der Wellenabschnitte 4 bei der in der Figur 5 dargestellten Ausführungsform angepasst, beziehungsweise der Bohrungen in den Wellenabschnitten 4 an deren axialen Enden, bei in den Verbindungselementen 5 eingebrachten Nuten 7.

Zurückkehrend zu der Figur 1 erkennt man, dass die einzelnen Verbindungselemente 5 jeweils zwei Konsolen 10 drehbar tragen, wobei die Konsolen 10 in Form von Platten, insbesondere ebenen Platten ausgeführt sind, die an einem Rüttelkörper 2 wenigstens mittelbar angeschraubt sind, siehe das zwischengeschaltete U-Profil 11 in der Figur 4. Dieses U-Profil 11 ist starr am Rüttelkörper 2 angeschraubt und ferner im Bereich der oberen Ecken der Konsolen 10 mit diesen verschraubt.

An jeder Konsole 10 ist ein Wälzlager 6 angeordnet, wobei vorliegend die beiden Wälzlager 6 zwischen den beiden Konsolen 10 durch ein gemeinsames Lagergehäuse 13 umschlossen werden, an welchem vorteilhaft die beiden Konsolen 10 angeschraubt sind, siehe die dargestellten Schrauben. Die beiden Wälzlager 6 können beispielsweise in das Lagergehäuse 13 eingepresst werden.

Jeweils zwei Wälzlager 6 umschließen somit gemeinsam ein Verbindungselement 5, so dass die zwei Konsolen 10 drehbar auf jeweils einem einzigen Verbindungselement 5 gelagert sind.

Die fluchtend zueinander angeordneten Wellenabschnitte 4 sind wiederum in Wälzlagern 9 drehbar gelagert, wobei je ein Wälzlager 9 an einem ortsfesten Ständer 8 montiert, im vorliegenden Fall seitlich angeschraubt beziehungsweise angeflanscht ist. Gemäß der in der Figur 1 gezeigten Darstellung ist jeder Wellenabschnitt 4 mittels eines einzigen Wälzlagers 9 in einem eigenen Ständer 8 gelagert. Bei der in der Figur 4 dargestellten Ausführung sind nur einige der Wellenabschnitte 4 unmittelbar in einem Ständer 8 mittels eines Wälzlagers 9 gelagert, beispielsweise jeder zweite.

An einem axial äußeren Ende, das heißt an dem axial äußersten Wellenabschnitt 4, wird die Kurbelwelle 3 durch eine Antriebsvorrichtung 1 über eine Drehachse, die in Axialrichtung mittig durch die einzelnen Wellenabschnitte 4 verläuft, gedreht, siehe die Figur 4. Aufgrund dieser Drehung laufen die Verbindungselemente 5 zusammen mit den Konsolen 10 auf einer Kreisbahn über der Drehachse um, und die einzelnen Rüttelkörper 2 werden aufgrund der in Umfangsrichtung der Kurbelwelle 3 zueinander versetzt angeordneten Verbindungselemente 5 auf und ab bewegt. Beispielsweise können zwei, drei oder vier Verbindungselemente 5 aufgrund ihres Versatzes relativ zueinander gemeinsam einen Bogen von 360 Grad ausbilden, wobei der Abstand in Umfangsrichtung zwischen den Verbindungselementen in der Regel konstant ist.

Wenn nun ein Wälzlager 9, das einen Wellenabschnitt 4 unmittelbar trägt oder ein Wälzlager 6, das eine Konsole 10 trägt, defekt ist, wobei sowohl die Wälzlager 9 als auch die Wälzlager 6 als Standardlager, insbesondere geschlossene, lebensdauerbeschmierte Lager und somit kostengünstig ausgeführt sein können, kann ein Austausch des defekten Lagers ohne besondere Lagerkenntnisse und ohne Demontage der gesamten Kurbelwelle 3 erfolgen. Vielmehr muss lediglich ein Verbindungselement 5, welches das Wälzlager 6 trägt oder axial benachbart zu einem defekten Wälzlager 9 angeordnet ist, von den beiden benachbart positionierten Wellenabschnitten 4 demontiert werden, was durch Lösen der Verschraubung erfolgt. Anschließend kann - bei einem defekten Wälzlager 6 - entweder die gesamte Einheit aus Verbindungselement 5, dem Lagergehäuse 13, den beiden Wälzlagern 6 und den beiden Konsolen 10 gegen eine neue entsprechend vormontierte oder zu montierende Einheit ausgetauscht werden, selbstverständlich nachdem die Konsolen 10 von dem zugeordneten Rüttelkörper 2 abgeschraubt worden sind. Sollte nur das Wälzlager 9 defekt sein, so kann dieses, nachdem die genannte Baueinheit von wenigstes einem Wellenabschnitt 4, der durch das Lager 9 getragen wird, gelöst worden ist, das Lager 9 auch von dem zugeordneten Ständer 8 abgeschraubt werden, von dem Wellenabschnitt 4 abgezogen werden und durch ein neues Lager ausgetauscht werden.

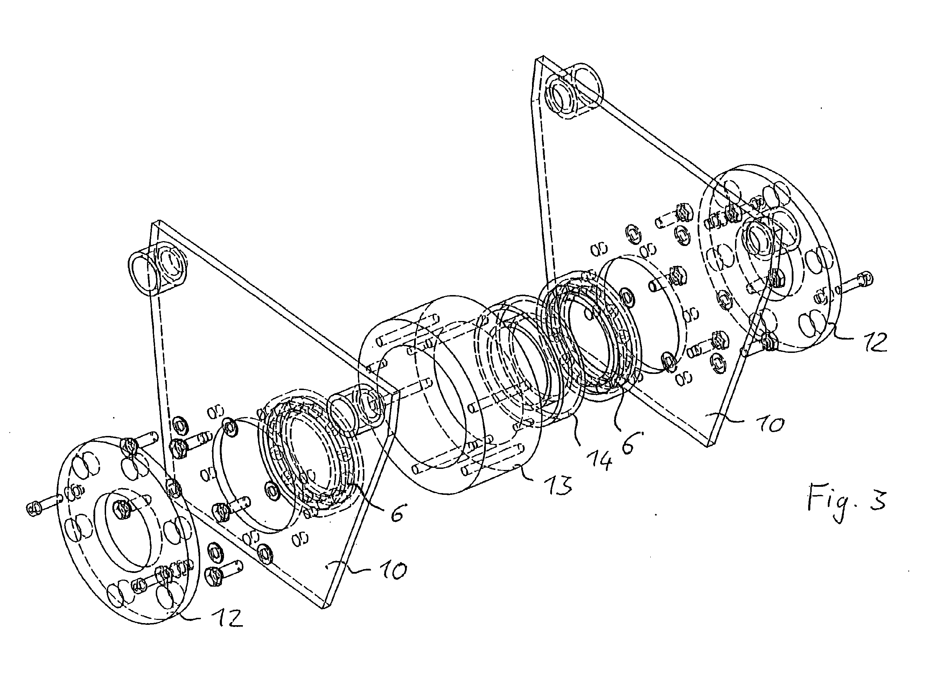

In der Figur 3 erkennt man nochmals die Montage der beiden Lager 6 in dem Lagergehäuse 13 und an den beiden Konsolen 10, welche gemeinsam von einem Verbindungselement 5 (nicht dargestellt) getragen werden. Die beiden Lager 6 können seitlich in das Lagergehäuse 13, welches vorliegend in Form eines Zylinderrings ausgeführt ist, eingeschoben werden. Besonders vorteilhaft sind die beiden Lager 6 in dem Lagergehäuse 13 eingepresst. Bei der gezeigten Ausführung sind ferner zwei Abstandsringe 14 axial zwischen die beiden Lager 6 geschaltet, wobei die beiden Abstandsringe 14 konzentrisch zueinander angeordnet sind und der äußere Abstandsring neben den beiden äußeren Lagerringen und der innere Abstandsring neben den beiden inneren Lagerringen der beiden Lager 6 angeordnet wird. Beide Lagerringe 14 werden gemeinsam von dem Lagergehäuse 13 umschlossen.

Die Konsolen 10 sind an dem Lagergehäuse 13 angeschraubt, und werden somit durch das Lagergehäuse 13, das über die beiden Lager 6 auf dem Verbindungselement 5 (nicht dargestellt) gelagert ist, getragen. Die beiden Ringschreiben 12, die axial von außen auf die Konsolen 10 aufgeschraubt sind, dienen dazu, die Verschraubung des Lagergehäuses 13 mit den Konsolen 10 zu schützen, insbesondere vor einer Verdreckung.

Besonders die in den Figuren gezeigte Montage der einzelnen Elemente aneinander, hier ausschließlich durch Verstiftungen und Verschraubungen, macht es möglich, die Kurbelwelle 3 zusammen mit den Lagern sowie den Ständern 8 (der äußere rechte Ständer 8 in der Figur 4 ist die Außenwand des Ballistikseparators) und den Rüttelkörpern 2 mit einfachen Werkzeugen, ohne besondere Kenntnisse fehlerfrei zu montieren.

Man beachte auch die Nut 15 an beiden Stirnseiten von jedem Wellenabschnitt 4, die in Radialrichtung verläuft und die dazu dient, bei der Herstellung des Wellenabschnitts 4 die Bohrungen für die Verschraubung und/oder Verstiftung mit dem Verbindungselement 5 exakt in Radialrichtung auszuführen.

Schließlich sei noch auf die beiden nebeneinander angeordneten Umfangsnuten 16 in jedem Verbindungselement 5 verwiesen, welche dazu dienen, jeweils einen Seegerring aufzunehmen, um die Position der Lager 6 beziehungsweise der Konsolen 10 in Axialrichtung auf den Verbindungselementen 5 festzulegen. Bei der gezeigten Ausführung greifen die entsprechenden Seegerringe axial beidseitig des Lagergehäuses 13 an diesem an und bestimmen somit die relative axiale Position zwischen Verbindungselement 5 und dem Lagergehäuse 13. Aufgrund der Verschraubung der Konsolen 10 mit dem Lagergehäuse 13 ist somit auch die axiale Position der beiden Konsolen 10 festgelegt.

## Patentansprüche

1. Sortiervorrichtung, insbesondere Ballistikseparator, zur Trennung von Abfällen,
1.1 mit einer Vielzahl von nebeneinander angeordneten, mittels einer Antriebsvorrichtung (1) relativ zueinander auf- und abwärts bewegbaren Rüttelkörpern (2), auf welche das zu sortierende Gut von oben aufgebbar ist; wobei
1.2 eine Kurbelwelle (3) vorgesehen ist, an deren Kurbeln die Rüttelkörper (2) angeschlossen sind, und welche von der Antriebsvorrichtung (1) in Umlauf versetzt wird, um so die Auf- und Abwärtsbewegung der Rüttelkörper (2) zu bewirken;
**dadurch gekennzeichnet, dass**
1.3 die Kurbelwelle (3) in ihrer Axialrichtung aus einer Vielzahl von Wellenabschnitten (4), die mit Abstand und fluchtend zueinander angeordnet sind, zusammengesetzt ist,
1.4 jeweils zwei in Axialrichtung benachbart zueinander angeordnete Wellenabschnitte (4) mittels eines exzentrisch zu den Wellenabschnitten (4) angeordneten, lösbar an den Wellenabschnitten (4) angeschlossenen Verbindungselementes (5) kraftschlüssig miteinander verbunden sind, und
1.5 das Verbindungselement (5) wenigstens einen Rüttelkörper (2) drehbar auf dem Verbindungselement (5) trägt.

2. Sortiervorrichtung gemäß Anspruch 1, **dadurch gekennzeichnet, dass** jedes Verbindungselement (5) jeweils einen einzigen Rüttelkörper (2) trägt.

3. Sortiervorrichtung gemäß einem der Ansprüche 1 oder 2, **dadurch gekennzeichnet, dass** das Verbindungselement (5) insbesondere in seinem axial mittleren Bereich einen zylinderförmigen Abschnitt aufweist, welcher von wenigstens einem Wälzlager (6) oder vorteilhaft von zwei nebeneinander angeordneten Wälzlagern (6) in Umfangsrichtung umschlossen wird und diese(s) Wälzlager (6) trägt, und das oder die Wälzlager (6), insbesondere mit ihrem Außenring, direkt oder indirekt, letzteres insbesondere über ein gemeinsames Lagergehäuse (13), an einem Rüttelkörper (2) montiert sind.

4. Sortiervorrichtung gemäß Anspruch 3, **dadurch gekennzeichnet, dass** das oder die Wälzlager (6) als geschlossenes, insbesondere lebensdauergeschmiertes Lager ausgeführt ist/sind.

5. Sortiervorrichtung gemäß einem der Ansprüche 1 bis 4, **dadurch gekennzeichnet, dass** das Verbindungselement (5) in Form eines Zylinders mit jeweils einer im Bereich von jedem axialen Ende in Umfangsrichtung des Zylinders konkaven Nut (7) ausgeführt ist, welche Nut (7) formschlüssig an der zylindrischen Oberfläche jeweils eines Wellenabschnittes (4) anliegt, oder jeder Wellenabschnitt (4) in Form eines Zylinders mit jeweils einer im Bereich von jedem axialen Ende in Umfangsrichtung des Zylinders konkaven Nut (7) ausgeführt ist, welche Nut (7) formschlüssig an der zylindrischen Oberfläche jeweils eines Verbindungselementes (5) anliegt.

6. Sortiervorrichtung gemäß Anspruch 5, **dadurch gekennzeichnet, dass** das Verbindungselement (5) und der Wellenabschnitt (4) im Bereich der Nut (7) miteinander verstiftet und/oder verschraubt sind.

7. Sortiervorrichtung gemäß einem der Ansprüche 1 bis 6, **dadurch gekennzeichnet, dass** die Kurbelwelle (3) mit wenigstens zwei oder insbesondere mit allen Wellenabschnitten (4) in jeweils wenigstens oder genau einem Ständer (8) drehbar gelagert ist, insbesondere mittels eines im Ständer (8) montierten Wälzlagers (9), welches insbesondere als geschlossenes, lebensdauergeschmiertes Lager ausgebildet ist.

8. Sortiervorrichtung gemäß einem der Ansprüche 1 bis 7, **dadurch gekennzeichnet, dass** jeder Rüttelkörper (2) lösbar, insbesondere durch eine Verschraubung an wenigstens einer Konsole (10), insbesondere an zwei in Axialrichtung der Kurbelwelle (3) nebeneinander angeordneten Konsolen (10), welche insbesondere plattenförmig ausgeführt ist/sind, angeschlossen ist, und jeweils ein Verbindungselement (5) durch die Konsole (10) oder die Konsolen (10) in Umfangsrichtung umschlossen durchgeführt ist.

9. Sortiervorrichtung gemäß Anspruch 3 und Anspruch 8, **dadurch gekennzeichnet, dass** an jeder Konsole (10) ein Wälzlager (6), insbesondere über ein gemeinsames Gehäuse (13), montiert ist.

10. Sortiervorrichtung gemäß Anspruch 9, **dadurch gekennzeichnet, dass** eine montierte Einheit aus einem Verbindungselement (5), Konsole (10) oder Konsolen (10), insbesondere gemeinsamen Lagergehäuse (13) und Wälzlager (6) zur Lagerung jeweils eines Rüttelkörpers (2) allein durch An- und Abschrauben von den beiden benachbart zu dem Verbindungselement (5) angeordneten Wellenabschnitten (4) und dem Rüttelkörper (2) durch eine baugleiche oder in ihren Abmaßen in Radialrichtung abweichende vormontierte Einheit austauschbar ist.

11. Sortiervorrichtung gemäß einem der Ansprüche 1 bis 10, **dadurch gekennzeichnet, dass** die Rüttelkörper (2) in Längsrichtung elastisch nachgiebig sind und/oder eine Längenverstelleinrichtung zum Ändern der axialen Länge der Rüttelkörper (2) vorgesehen ist.
